# FASCICULE DE BREVET EUROPEEN

(11) **EP 2 098 108 B1**
(45) Date de publication et mention de la délivrance du brevet: **29.08.2012**
(21) Numéro de dépôt: 08021723.5
(22) Date de dépôt: 15.12.2008
(51) Int. Cl.: A01D 23/02

(54) **Dispositif de scalpage pour machine à récolter des tubercules en terre**
Schälvorrichtung für Maschine zum Ernten von Knollengewächsen
Scalping device for a machine for harvesting tubers from the soil

(30) Priorité: 07.03.2008 FR 0801262
(43) Date de publication de la demande: 09.09.2009
(73) Titulaire: EXEL INDUSTRIES, 51200 Epernay (FR)
(72) Inventeur: Ballu, Patrick Jean Marie, 51100 Reims (FR)
(74) Mandataire: Jouanneau, Lionel

(56) Documents cités:
- FR-A- 1 243 859
- FR-A- 2 460 595
- FR-A- 2 490 920
- FR-A- 2 891 693

## Description

La présente invention se rapporte à un dispositif de scalpage pour machine à récolter les tubercules en terre, telle qu'une machine à arracher les betteraves.

Comme cela est connu en soi, les machines à récolter les tubercules en terre telles que les machines à arracher les betteraves comprennent en général une unité de scalpage, située derrière une unité d'effeuillage et devant une unité d'arrachage, dans le sens de la marche.

L'unité d'effeuillage permet, en général au moyen de couteaux tournants, de supprimer les feuilles qui poussent sur les tubercules.

L'unité de scalpage permet de couper les sommets des tubercules sur lesquels les feuilles étaient implantées. La conception de l'unité de scalpage doit prendre en compte la population, l'irrégularité d'espacement, l'hétérogénéité de levée et d'émergence des tubercules et la présence d'adventices.

L'unité d'arrachage permet enfin d'extraire les tubercules de la terre, avant de les acheminer vers des moyens de deterrage, de convoyage et de stockage.

L'unité de scalpage se présente notamment sous la forme d'un bras articulé comprenant des moyens de guidage, ou tâteur, permettant le guidage du bras sur le sommet des tubercules, et au moins un couteau.

Plus précisément, l'unité de scalpage comprend un bras articulé autour d'un axe orienté de manière sensiblement transversale par rapport à une direction d'avancement de la machine à récolter les tubercules en terre, comme le décrit dans le document FR 2 891 693 A.

A une extrémité libre du bras, se trouve une platine fixe rapportée, par exemple, par soudage.

Sur cette platine est monté au moins un couteau de scalpage dont une partie tranchante est orientée dans le sens d'avancement.

Sur le bras sont également montés des moyens de guidage situés en amont du couteau par rapport au sens d'avancement.

En fonctionnement, le bras articulé suit donc le sommet des tubercules grâce aux moyens de guidage. Les tubercules sont scalpées proportionnellement à leur éloignement du plan de travail du broyeur d'effeuillage.

De manière générale, les tubercules hauts sont les moins décolletés tandis que les tubercules bas sont les plus décolletées. La variation du décolletage est obtenue automatiquement par l'inclinaison du bras de l'unité de scalpage.

Une telle unité de scalpage peut présenter plusieurs inconvénients.

Tout d'abord, le couteau risque de casser les tubercules hauts en début de décolletage. En effet, un tubercule haut présente un profil émergé avec une forte pente initiale qui va entraîne une rotation importante du bras de l'unité de scalpage et une pente importante de la trajectoire du couteau. Ceci se traduit par des efforts de coupe importants perpendiculairement à la face supérieure du couteau. La section de coupe est alors soumise à des efforts de cisaillement élevés qui peuvent entraîner la casse du tubercule.

Ensuite les tubercules bas risquent de ne pas être entièrement décolletés. En effet, le couteau empêche les moyens de guidage de redescendre à la sortie du tubercule. La surface importante de la face inférieure du couteau empêche celui-ci de descendre malgré l'effort d'un ressort d'appui. Les moyens de guidage n'ont alors pas la longueur nécessaire pour descendre et décolleter entièrement le tubercule bas suivant.

Enfin, la variation de la hauteur de l'effeuilleuse risque d'entraîner la casse du collet en cours de coupe. En effet, la variation de la hauteur de l'effeuilleuse due au contrôle de positionnement en hauteur ou aux aléas du terrain entraîne une rotation du bras de tâteur et le soulèvement des collets, pouvant entraîner la rupture de ce dernier.

La présente invention vise à pallier les problèmes précédemment mentionnés et consiste pour cela en un dispositif de scalpage, du type comprenant un bras articulé, des moyens de guidage montés sur ce bras et au moins un couteau monté sur ledit bras, **caractérisé en ce que** le couteau est monté pivotant sur ledit bras autour d'un axe sensiblement transversal par rapport à un sens d'avancement du dispositif de scalpage.

Ainsi, l'utilisation d'un couteau monté pivotant permet à ce dernier de s'orienter automatiquement selon les efforts subits pour que ceux-ci s'équilibre au mieux. Le couteau suit alors exactement la trajectoire de son axe d'articulation et le profil de la coupe du collet correspond de manière précise au profil du tubercule à décolleter. L'effort de coupe du collet reste tangent aux faces du couteau indépendamment du mouvement du bras support.

De ce fait, les tubercules hauts ne sont plus cassés, le profil du collet est optimisé, les tubercules bas sont entièrement décolletés et la variation de la hauteur de l'effeuilleuse n'a pas d'effet sur la qualité du décolletage.

Avantageusement, l'axe est situé entre les moyens de guidage et le couteau.

Avantageusement encore, le couteau est monté de manière amovible.

La mise en oeuvre de l'invention sera mieux comprise à l'aide de la description détaillée qui est exposée ci-dessous en regard du dessin annexé.
La figure 1 est une représentation schématique d'une unité de scalpage selon l'invention.
La figure 2 est une représentation schématique du couteau équipant l'unité de scalpage de la figure 1 désolidarisé de son unité de scalpage.
La figure 3 illustre schématiquement le fonctionnement de l'unité de scalpage en marquant la position du bras de l'unité et l'orientation du couteau à divers endroits au cours d'une coupe.

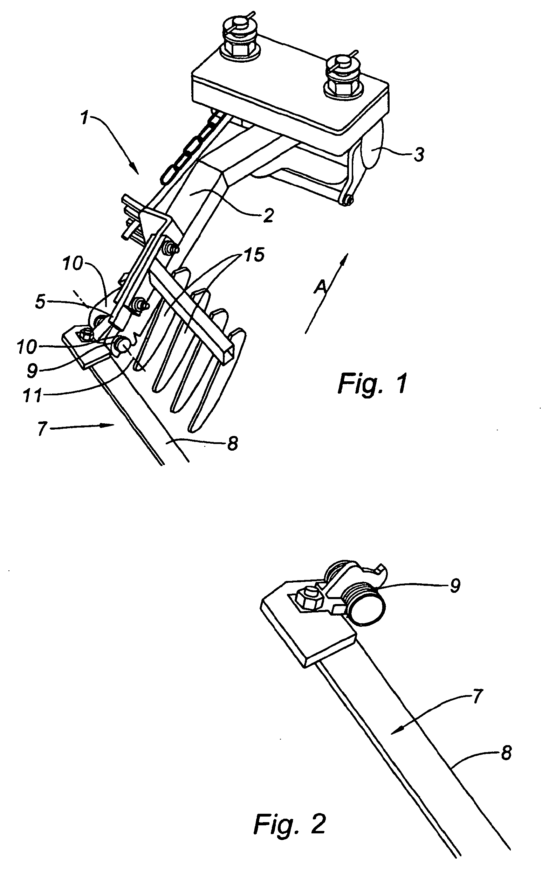

Une unité de scalpage 1 selon la figure 1 comprend un bras 2 articulé autour d'un axe 3 orienté de manière sensiblement transversale par rapport à une direction d'avancement A d'une machine (non représentée) à récolter des tubercules en terre, telle qu'une machine à arracher des betteraves.

A une extrémité libre du bras 2, se trouve une platine fixe 5, rapporté par exemple, par soudage.

Sur cette platine 5 est monté de manière amovible un couteau de scalpage 7 dont une partie tranchante 8 est orientée dans le sens d'avancement A.

Plus précisément, le couteau 7 est monté sur la platine 5 de manière pivotante par l'intérmédiaire d'une articulation tubulaire 9, placée entre deux oeillets 10 de la platine 5 l'ensemble étant traversé par un axe 11 de maintien.

Ainsi, le couteau est apte à pivoter autour de l'axe 11 orienté selon une direction transversale au sens d'avancement.

Sur le bras 2 sont également montés des moyens de guidage 15 situés en amont du couteau 7 par rapport au sens d'avancement A.

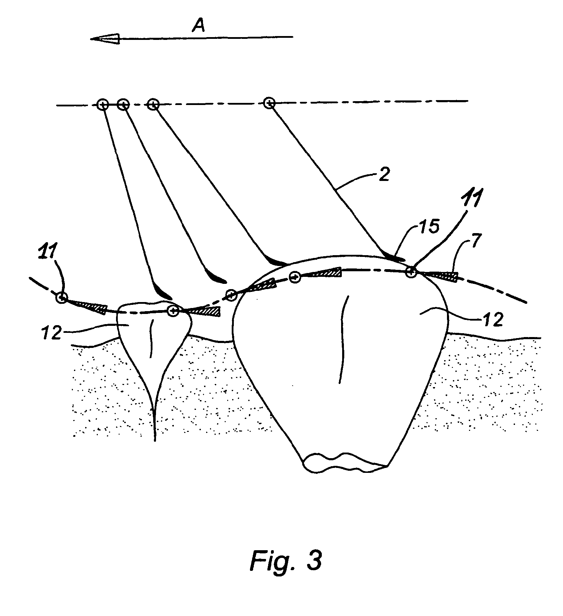

En fonctionnement, tel que représenté sur la figure 3, le couteau 7 subit des efforts qui s'équilibrent et permettent à ce dernier de suivre exactement la trajectoire de l'axe d'articulation 11. Le profil de la coupe du collet correspond alors précisément au profil du turbercule, en l'espèce une betterave 12.

L'effort de coupe du collet reste tangeant aux faces du couteau indépendamment du mouvement du bras 2.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre des revendications.

## Revendications

1. Dispositif de scalpage (1), du type comprenant un bras articulé (2), des moyens de guidage (15) montés sur ce bras et au moins un couteau (7) monté sur ledit bras (2) **caractérisé en ce que** le couteau (7) est monté pivotant sur ledit bras (2) autour d'un axe (11) sensiblement transversal par rapport à un sens d'avancement (A) du dispositif de scalpage (1).

2. Dispositif de scalpage (1) selon la revendication 1, **caractérisé en ce que** l'axe (11) est situé entre les moyens de guidage (15) et le couteau (7).

3. Dispositif de scalpage (1) selon l'une quelconque des revendications 1 ou 2, **caractérisé en ce que** le couteau (7) est monté de manière amovible.

## Claims

1. A scalping device (1), comprising a hinged arm (2), guide means (15) mounted on that arm, and at least one knife (7) mounted on said arm (2), **characterized in that** the knife (7) is mounted pivoting on the arm (2) around an axis (11) that is substantially transverse relative to a direction of progression (A) of the scalping device (1).

2. The scalping device (1) according to claim 1, **characterized in that** the axis (11) is situated between the guide means (15) and the knife (7).

3. The scalping device (1) according to any one of claims 1 or 2, **characterized in that** the knife (7) is mounted removably.

## Patentansprüche

1. Skalpiervorrichtung (1) der Bauart, die einen Gelenkarm (2), auf diesem Arm montierte Führungsmittel (15) und mindestens ein auf dem Arm (2) montiertes Messer (7) umfasst, **dadurch gekennzeichnet, dass** das Messer (7) auf dem Arm (2) um eine im Verhältnis zu einer Vorschubrichtung (A) der Skalpiervorrichtung (1) etwa transversalen Achse (11) schwenkbar montiert ist.

2. Skalpiervorrichtung (1) nach Anspruch 1, **dadurch gekennzeichnet, dass** sich die Achse (11) zwischen den Führungsmitteln (15) und dem Messer (7) befindet.

3. Skalpiervorrichtung (1) nach einem der Ansprüche 1 oder 2, **dadurch gekennzeichnet, dass** das Messer (7) abnehmbar montiert ist.
